Europäisches Patentamt

European Patent Office

Office européen des brevets

(19)

(11) Publication number: **0 265 682 B1**

# EUROPEAN PATENT SPECIFICATION

(45) Date of publication of patent specification: **02.09.92**

(51) Int. Cl.⁵: **B60G 11/46**, B60G 21/04, F16F 1/36

(21) Application number: **87114152.9**

(22) Date of filing: **28.09.87**

(54) **Device for motor-car suspensions.**

(30) Priority: **07.10.86 IT 2191686**

(43) Date of publication of application:
**04.05.88 Bulletin 88/18**

(45) Publication of the grant of the patent:
**02.09.92 Bulletin 92/36**

(84) Designated Contracting States:
**DE ES FR GB SE**

(56) References cited:
**DE-A- 2 527 733**
**DE-A- 2 741 521**
**DE-A- 3 004 158**

(73) Proprietor: **PIRELLI SISTEMI ANTIVIBRANTI S.P.A.**
**Piazzale Cadorna, 5**
**I-20123 Milan(IT)**

(72) Inventor: **Ugazio, Pierangelo**
**Viale Romolo 6**
**I-40143 Milan(IT)**
Inventor: **Pham, Anh Tuan**
**16 Rue de Montoidier**
**F-78310 Elancourt Paris(FR)**
Inventor: **Botti, Ubaldo**
**Voa Sporting Mirasole, 47/13**
**I-20090 Noverasco Milan(IT)**

(74) Representative: **Dr. Elisabeth Jung Dr. Jürgen Schirdewahn Dipl.-Ing. Claus Gernhardt**
**P.O. Box 40 14 68 Clemensstrasse 30**
**W-8000 München 40(DE)**

EP 0 265 682 B1

## Description

The present invention pertains to a suspension device for motor vehicles and it particularly relates to a device ensuring the steering, suspension and height-adjustment of the front and/or rear train in motor vehicles.

Suspension devices for motor vehicles are known in which transverse leaf springs are associated with the suspension arms.

For example the Document DE-A-2 741 521 discloses a suspension device: corresponding to the preamble of claim 1. The leaf spring is connected to the body by means of two oscillating arms arranged respectively at the ends of the leaf spring and by means of two struts having one end engaged at the middle of the leaf spring and the other ends to the body.

However, leaf springs made of steel can undergo very small bendings so that the confort of the suspension appears very weak.

Attemps were also made in the past to use pneumatic springs to accomplish suspension and height-adjustment functions, but said springs have not been widely spread due to their remarkable flexibility which gives rise to a strong rolling movement of the motor vehicle body, if specific counteracting means is not duly provided.

A further problem related to traditional suspension devices resides in their comparative complexity and bulkiness particularly in a vertical direction, to the detriment of other components such as for example the luggage-receptacle and of the possibility of saving money during manufacture thus reaching more reduced final prices.

The object of the present invention is to provide a suspension device allowing the achievement of:

a) a height-adjustment by means of fluid springs, in particular air springs;

b) a reduced vertical bulkiness which, in the specific case of a rear suspension, entirely disengages the luggage-receptacle from the rear suspension;

c) a reduced number of mechanical components;

- a low weight;
- more comfort, although leaf springs are used.

Obviously these specific objects are added of the more general aims of a suspension device, namely:

- a suspension action;
- a longitudinal and transverse steering;
- a substantial rolling reduction.

The foregoing objects are achieved by a suspension device according to claim 1

As it will become more apparent from the following detailed description of a preferred embodiment of the present invention, the same attains the intended purposes in that:

- the steering function is ensured by the steering structure, preferably of triangular form, having its vertex facing backwards and horizontally disposed so that it symmetrically bears on, and is engaged with, a transverse leaf spring with the ends of which the wheels are associated;

- the suspension and height-adjustment function is ensured by the fluid spring mounted between the steering structure and the body;

- the anti-rolling function is ensured by said leaf spring on which the above mentioned steering structure bears, which spring also contributes to the suspension function.

In the accompanying drawings:

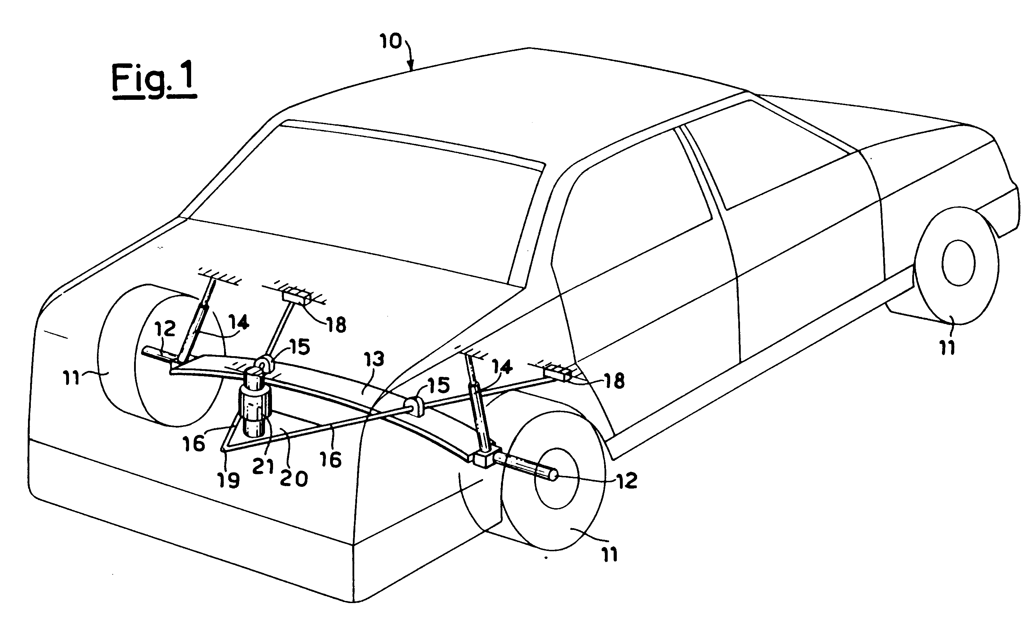

- Fig. 1 is a perspective view of a car, merely outlined, on which the suspension device of the invention is mounted, which is also diagrammatically shown;

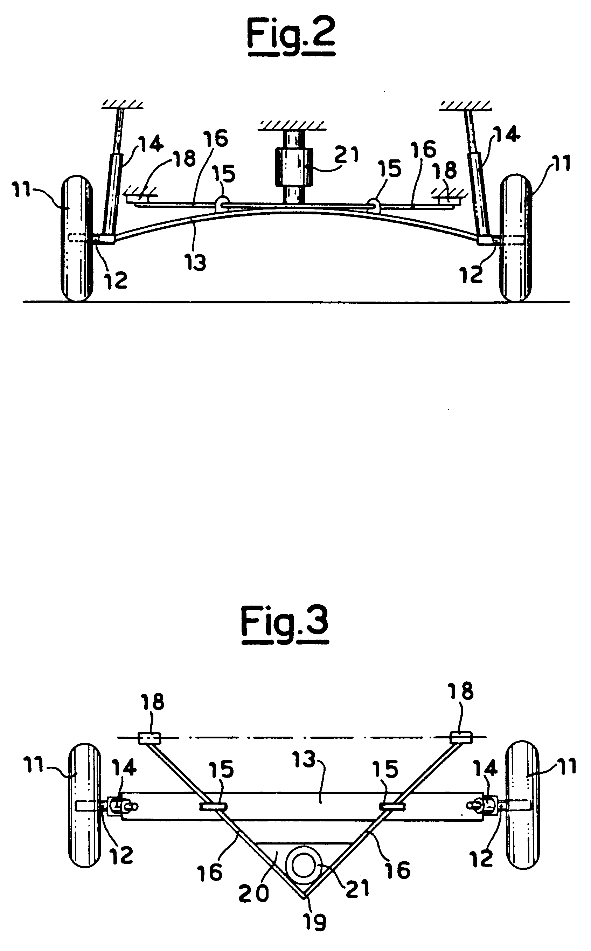

- Fig. 2 is a side view of the only suspension device; and

- Fig. 3 is a top plan view of the suspension device.

Referring to the drawings, the motor vehicle body is generally identified by reference numeral 10. Said body is provided with two wheels 11 mounted on hubs to which the ends of a preferably upwardly-curved leaf spring 13 are integral; to the above ends usual shock absorbers 14 are also fastened in a traditional manner.

On the upper face of the leaf spring are engaged, through support blocks 15, the two arms or sides 16 of a horizontal steering structure, which in this embodiment is of triangular form and is disposed symmetrically to the longitudinal center line of the motor vehicle.

The ends of the two arms 16 are engaged with the motor vehicle body by means of two flexible articulated joints 18, whereas the vertex 19 formed with the opposed ends of the two arms 16 is provided with a triangular plate 20 on which the lower end of a pneumatic suspension spring 21 is bolted, the other end of which being fastened to the motor vehicle body.

This suspension spring can be in the form of a bellows, made of strengthened elastomeric material, containing air or other pressurized gas or fluid.In this case a height adjustment device is associated with the spring; it is designed to adjust the body height with respect to the suspension system and thus to the ground, and it is for example of the type already adopted for industrial motor vehicles.

The leaf spring in turn can be made of spring steel or of strengthened plastic material. In addition it can be connected to the wheel hubs fixedly or by way of elastic articulated joints.

Finally the articulated joints 18 can have a diversified stiffness so that they may mainly ensure a steering function, while also fulfilling the function of a running-noise absorber.

In the embodiment shown the steering structure is of triangular form and a single pneumatic suspension spring is provided. Such an embodiment is however susceptible of conceptually and mechanically equivalent modifications.

For example the two arms 16, instead of being joined to each other in the region of their vertex 19,can be fixedly connected by means of a transverse arm; it is in fact an essential condition that the steering structure should offer a resistance to torsional stress, should be engaged in bearing relationship with the leaf spring 13 and be oriented as shown, i.e. with two arms 16 diverging from the motor vehicle end towards the central portion thereof. Likewise, instead of a single pneumatic spring 21, it is possible to provide two pneumatic or fluid springs which are disposed symmetrically to the longitudinal center line of the motor vehicle.

## Claims

1. A suspension device for motor vehicles ensuring the steering and suspension of the respective pairs of wheels (11), comprising a transverse leaf spring (13) whereby two arms (16) of a rigid steering structure are engaged with said leaf spring, said arms diverging symmetrically to the longitudinal center line of the motor vehicle from the motor vehicle end towards the central portion thereof, the most spread apart ends of said arms of the above mentioned steering structure being engaged with the motor vehicle body (10) by means of flexible articulated joints (18)
characterised in that;
the suspension device is for front and/or rear wheels (11);
that said wheels are mounted at the ends of said transverse leaf spring (13) and said transverse leaf spring (13) permits movement of the wheels in a vertical plane;
that said two arms (16) are engaged with said transverse leaf spring by means of bearings;
and that the ends (19) of the arms (16) opposite to the said most spread apart ends are fixed to one end of at least a suspension spring (21) whose other end is fastened to the motor vehicle body (10), said suspension spring being a fluid spring (21) which allows height adjustment.

2. A suspension device according to claim 1, characterized in that said steering structure is of triangular form, the opposed ends (19) of said arm (16) being fixedly fastened to each other.

3. A suspension device according to claim 3, characterized in that said steering structure is provided with a support plate (20) fixed to the connecting vertex of said two opposed ends (19), to said plate (20) being secured said one end of the suspension spring (21).

4. A suspension device according to claim 2, characterized in that said fluid spring (21) is a pneumatic spring.

## Patentansprüche

1. Aufhängungsvorrichtung für Motorfahrzeuge zum Gewährleisten des Lenkens und des Aufhängens der betreffenden Radpaare (11), umfassend eine Querblattfeder (13), wobei zwei Arme (16) eines starren Lenkgebildes mit der Blattfeder im Eingriff stehen, die Arme symmetrisch zur Längsmittellinie des Kraftfahrzeuges vom Kraftfahrzeugende in Richtung gegen dessen mittleren Teil divergieren und die am weitesten auseinanderliegenden Enden der Arme des oben genannten Lenkgebildes mit dem Kraftfahrzeugkörper (10) mittels flexibler Gelenkverbindungen (18) verbunden sind,
**dadurch gekennzeichnet,**
daß die Aufhängungsvorrichtung für vordere und/oder hintere Räder (11) vorgesehen ist;
daß die Räder an den Enden der Querblattfeder (13) angebracht sind und die Querblattfeder (13) Bewegung der Räder in einer vertikalen Ebene ermöglicht;
daß die beiden Arme (16) mit der Querblattfeder mittels Lagern in Verbindung stehen; und
daß die Enden (19) der Arme (16), die den am weitesten auseinander liegenden Enden gegenüberliegen, an einem Ende wenigstens einer Aufhängungsfeder (21) befestigt sind, deren anderes Ende an dem Kraftfahrzeugkörper (10) befestigt ist, und daß die Aufhängungsfeder eine Fluidfeder (21) ist, die eine Höheneinstellung ermöglicht.

2. Aufhängungsvorrichtung nach Anspruch 1, dadurch gekennzeichnet, daß das Lenkgebilde dreieckige Gestalt hat und die gegenüberliegenden Enden (19) der Arme (16) sicher aneinander befestigt sind.

3. Aufhängungsvorrichtung nach Anspruch 3, dadurch gekennzeichnet, daß das Lenkgebilde mit einer Tragplatte (20) versehen ist, die an der Verbindungsspitze der beiden gegenüberliegenden Enden (19) befestigt ist und an der das genannte eine Ende der Aufhängungsfeder (21) befestigt ist.

4. Aufhängungsvorrichtung nach Anspruch 1, dadurch gekennzeichnet, daß die Fluidfeder (21) eine Luftfeder ist.

**Revendications**

1. Un dispositif de suspension, destiné à des véhicules automobiles, assurant la conduite et la suspension des paires de roues respectives (11), comprenant un ressort à lames transversal (13), deux bras (16) d'une structure rigide de conduite étant engagés avec ledit ressort à lames, lesdits bras divergeant depuis l'extrémité du véhicule automobile vers la partie centrale de celui-ci de façon symétrique par rapport à l'axe longitudinal du véhicule automobile, les extrémités les plus écartées desdits bras de la structure de conduite mentionnée ci-dessus étant engagées avec la caisse (10) du véhicule automobile au moyen de joints flexibles articulés (18)

caractérisé en ce que

le dispositif de suspension est destiné aux roues avant et/ou arrière (11);

que lesdites roues sont montées aux extrémités dudit ressort à lames transversal (13) et ledit ressort à lames transversal (13) permet le déplacement des roues dans un plan vertical;

que lesdits deux bras (16) sont engagés avec ledit ressort à lames transversal au moyen de paliers;

et que les extrémité (19) des bras (16) opposées auxdites extrémités les plus écartées sont fixées à une première extrémité d'au moins un ressort de suspension (21) dont l'autre extrémité est fixée sur la caisse (10) du véhicule automobile, ledit ressort de suspension étant un ressort fluidique (21) qui permet un ajustement en hauteur.

2. Un dispositif de suspension selon la revendication 1, caractérisé en ce que ladite structure de conduite est de forme triangulaire, les extrémités opposées (19) dudit bras (16) étant fixées de façon ferme entre elles.

3. Un dispositif de suspension selon la revendication 3, caractérisé en ce que ladite structure de conduite comporte une plaque de support (20) fixée au sommet de liaison desdites deux extrémités opposées (19), ladite première extrémité du ressort de suspension (21) étant fixée à ladite plaque (20).

4. Un dispositif de suspension selon la revendication 2, caractérisé en ce que ledit ressort fluidique (21) est un ressort pneumatique.

Fig.1

# Fig.2

# Fig.3